## Europäisches Patentamt
## European Patent Office
## Office européen des brevets

(19)

(11) Numéro de publication: **0 241 621**
**B1**

(12) **FASCICULE DE BREVET EUROPEEN**

(45) Date de publication du fascicule du brevet:
**28.02.90**

(51) Int. Cl.⁴: **B23K 26/00, B21L 11/00**

(21) Numéro de dépôt: **86420101.7**

(22) Date de dépôt: **15.04.86**

(54) **Procédé et dispositif pour la fabrication d'une chaîne métallique de bijouterie.**

(43) Date de publication de la demande:
**21.10.87 Bulletin 87/43**

(45) Mention de la délivrance du brevet:
**28.02.90 Bulletin 90/9**

(84) Etats contractants désignés:
**CH DE GB LI**

(56) Documents cités:
**FR-A- 603 818**
**FR-A- 2 357 315**
**FR-A- 2 389 447**

(73) Titulaire: **CHEVAL Frères Société Anonyme:, ECOLE VALENTIN B.P. 3004 Rue des Bosquets, F-25025 Besançon Cédex(FR)**
Titulaire: **FLAMAND Société Anonyme:, 264, rue de Périgueux, F-16022 Angoulème Cédex(FR)**

(72) Inventeur: **Picaud, Hervé Jean Michel Henri, Chemin du Village Chatillon Le Duc, F-25870 Geneville(FR)**
Inventeur: **Caillaud, Michel, 11, Impasse Barbe, F-16160 Gond Pontouvre(FR)**

(74) Mandataire: **Ballot, Paul Denis Jacques, Cabinet Ballot-Schmit 7, rue le Sueur, F-75116 Paris(FR)**

ACTORUM AG

**Description**

La présente invention concerne un procédé de fabrication d'une chaîne métallique de bijouterie à partir d'un fil métallique continu, selon lequel on enroule sur un mandrin le fil métallique continu pour le conformer en hélice à spires non jointives, on découpe une à une successivement les diverses spires ouvertes formées, on façonne les diverses spires découpées pour réaliser des maillons de forme déterminée et on procède pour réaliser la fermeture complète de chacun des maillons, au soudage individuel des divers maillons engagés les uns dans les autres en dirigeant sur la fente formée dans chaque maillon une impulsion laser de durée et de puissance crête prédéterminées en fonction du diamètre du fil métallique utilisé et de la valeur du métal constituant ledit fil métallique.

Les procédés connus comprennent, de façon traditionnelle, une première étape qui consiste à réaliser une chaîne complète constituée d'un ensemble de maillons façonnés engagés les uns dans les autres, mais restant ouverts, puis une seconde étape consistant à réaliser par soudure la fermeture de l'ensemble des maillons. Selon la plupart des procédés traditionnels, la seconde étape implique, de faire pénétrer une soudure en poudre dans l'interstice de chaque maillon, d'enlever l'excédent de soudure recouvrant la totalité de la chaîne, puis d'introduire l'ensemble de la chaîne dans un four à bande sous atmosphère contrôlée ou un four à gaz.

Une telle façon de faire présente plusieurs inconvénients. En effet, avant passage au four, il est nécessaire de procéder à un nettoyage complet pour enlever le surplus de métal d'apport non utilisé. Par ailleurs, dans le cas d'une chaîne poreuse, l'état de surface de la chaîne laisse souvent à désirer, car le métal d'apport est venu se loger dans les porosités et forme des zones mates. Le passage au four de l'ensemble de la chaîne réalise, en outre, un recuit du métal qui devient tendre. La mise en œuvre du procédé susmentionné se heurte ainsi à des difficultés, particulièrement lorsqu'il s'agit de réaliser une chaîne à partir d'un fil très fin et conduit, souvent, à des mises au rebut qui imposent de refondre et réaffiner le métal et, par suite, augmentent le coût de mise en œuvre du procédé. On notera, de plus, que l'opération de soudure au four abaisse le titre du métal précieux de la chaîne, de sorte qu'il est nécessaire au départ de relever le titre de la chaîne par rapport à la valeur finale souhaitée.

Afin de remédier à certains des inconvénients précités, il a par ailleurs été proposé par le document FR-A 12 389 447 de réaliser le soudage par laser des maillons d'une chaîne métallique, sans toutefois qu'aucune précision soit donnée concernant les caractéristiques du faisceau laser permettant d'obtenir des résultats satisfaisants, hormis le fait que l'émission du faisceau laser et le défilement de la chaîne sont pilotés par une commande électronique générale. De plus, selon ce procédé connu, l'opération de soudure est réalisée au cours d'une opération spécifique, sur tout un ensemble de maillons fendus déjà formés et engagés les uns dans les autres en formant une chaîne complète, ce qui notamment ne permet pas d'augmenter les cadences de fabrications.

La présente invention vise à remédier aux inconvénients précités et à permettre la fabrication d'une chaîne métallique de bijouterie d'une façon rapide et efficace, tout en garantissant une excellente qualité de soudure et un bel aspect du produit fini.

Ces buts sont atteints grâce à un procédé, du type mentionné en tête de la description, caractérisé en ce qu'on réalise le soudage individuel de chaque spire découpée immédiatement après sa conformation en maillon de forme prédéterminée, en ce que l'impulsion laser présente un front de montée raide correspondant à un temps de montée compris entre environ 40 et 70 microsecondes et permettant d'atteindre rapidement ladite puissance crête maximum $P_1$ prédéterminée, un sommet d'une durée déterminée et légèrement descendant à partir de ladite puissance crête maximum prédéterminée $P_1$ adjacente au front de montée, puis un front de descente pratiquement vertical correspondant à un temps de descente inférieur au temps de montée et en ce que pendant ladite durée prédéterminée correspondant au sommet légèrement descendant de l'impulsion laser, la chute de puissance $P_1$–$P_2$ est de l'ordre de 20% de la puissance crête $P_1$, $P_2$ représentant la puissance de l'impulsion laser correspondant au point d'intersection du sommet avec le front de descente.

L'invention concerne, également, un dispositif de fabrication d'une chaîne métallique de bijouterie pour la mise en œuvre du procédé sus-mentionné, comprenant une bobine sur laquelle est monté un fil métallique continu, une machine comprenant une filière pour donner au fil métallique continu la forme d'une hélice à spires non jointives, des moyens pour produire une avance de l'hélice pas à pas, des outils de découpe pour assurer le sectionnement successif des différentes spires, des pinces pour façonner les diverses spires découpées en maillons de forme prédéterminée fermés et imbriqués les uns dans les autres, et un générateur laser pour procéder au soudage individuel des divers maillons engagés les uns dans les autres, caractérisé en ce que les outils de découpe et les pinces sont disposés de manière à ménager un espace libre pour l'application d'un faisceau laser à partir du générateur laser et en ce que le générateur laser est du type YAG et comprend une tête laser avec au moins un tube de pompage, un banc de condensateurs pour stocker une énergie très supérieure à celle prélevée à chaque émission d'une impulsion laser, une alimentation à découpage haute fréquence pour la charge du banc de condensateurs, un circuit de mesure de la tension aux bornes du banc de condensateurs et de réglage de la tension de charge du banc de condensateurs par l'intermédiaire de l'alimentation à découpage, un ou plusieurs commutateurs statiques en série avec le ou les tubes de pompage de la tête laser et un circuit logique de commande pour commander l'ouverture et la fermeture des commutateurs statiques et régler la durée d'impulsion et la fréquence de répétition des impulsions.

L'invention concerne encore un procédé selon lequel on fabrique, en parallèle, plusieurs chaînes métalliques de bijouterie à partir de plusieurs fils métalliques continus, on enroule sur plusieurs mandrins différents les différents fils métalliques continus pour les conformer en hélices à spires non jointives et on procède, alternativement, sur chacune des hélices, d'une part, à la découpe d'une spire ouverte formée à l'extrémité libre de l'hélice et au façonnage d'un maillon de forme prédéterminée à partir de la spire découpée et, d'autre part, au soudage individuel, à l'aide d'une impulsion laser, d'un maillon façonné, une opération de découpe de spire et de façonnage d'un maillon étant réalisée sur une chaîne pendant qu'une opération de soudage de maillon est réalisée sur une autre chaîne et vice versa et les opérations de soudage de maillons, réalisées sur les différentes chaînes métalliques fabriquées en parallèle, sont effectuées à partir d'une tête laser unique dont le rayonnement est dirigé alternativement vers les zones à souder des différentes chaînes métalliques.

D'autres caractéristiques et avantages de l'invention ressortiront de la description suivante d'un mode particulier de réalisation de l'invention, en référence au dessin annexé, sur lequel :

- la fig. 1 est une vue schématique en élévation montrant la position d'un maillon au moment d'une soudure individuelle au laser conformément au procédé selon l'invention,
- la fig. 2 représente une forme d'impulsion laser quasi idéale utilisable dans le procédé selon l'invention,
- la fig. 3 représente une forme d'impulsion laser qui, en pratique, peut être considérée comme tout-à-fait satisfaisante pour la mise en oeuvre du procédé selon l'invention,
- la fig. 4 représente le schéma synoptique d'un générateur laser YAG de soudure et de ses circuits de commande pour la mise en oeuvre du procédé selon l'invention et,
- la fig. 5 représente schématiquement la configuration de la tête laser d'un générateur laser YAG utilisable pour la mise en oeuvre du procédé selon l'invention.

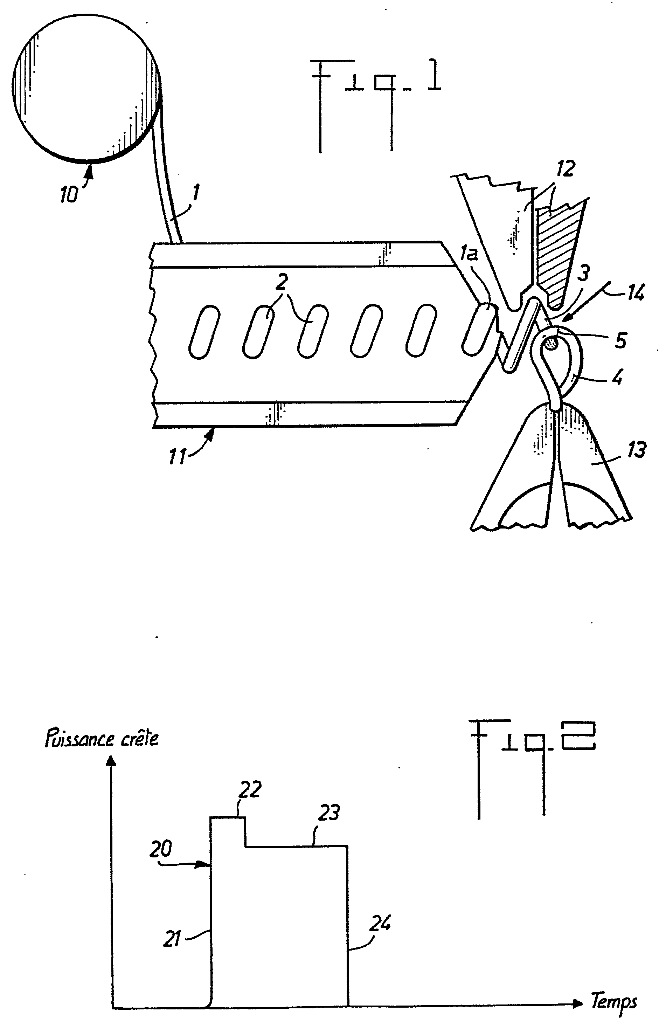

On décrira tout d'abord brièvement le procédé général de fabrication d'une chaîne de bijouterie, en référence à la fig. 1.

La fabrication d'une chaîne métallique peut être réalisée à très forte cadence, à partir d'un fil métallique continu 1 enroulé sur une bobine 10, à l'aide d'une machine comprenant une filière 11 pour donner au fil métallique continu 1 la forme d'une hélice 1a comportant des spires non jointives 2 et produire une avance de l'hélice 1a par pas, de façon à amener chaque fois la dernière spire 3 située du côté de l'extrémité libre de l'hélice 1a en regard d'outils de découpe 12 qui assurent ainsi le sectionnement successif des différentes spires.

Chaque spire découpée, qui lors de sa découpe est engagée dans le maillon précédent déjà formé, est saisie par des pinces 13 et façonnée pour former elle-même un nouveau maillon 4 présentant une fente 5 qui peut être plus ou moins ouverte. Selon l'invention, l'opération de soudure des maillons, visant à supprimer la fente 5, est réalisée individuellement au niveau de chaque maillon nouvellemet formé, immédiatement après l'opération de façonnage. L'opération de soudure est ainsi réalisée sur un maillon 4 lorsqu'il se trouve dans une position telle que celle représentée sur la fig. 1. Dans cette position, le maillon 4, nouvellement façonné, est maintenu en position par des pinces 13 qui saisissent le maillon dans sa zone opposée à la fente 5 du maillon et sont disposées de manière à dégager une zone d'accès à cette fente 5 et la prochaine spire à découper 3 est elle-même déjà engagée dans le maillon 4. Un espace libre est ménagé entre les outils de découpe 12 et les pinces 13 et permet d'appliquer un faisceau laser 14 selon la flèche de la fig. 1 sur la fente 5 du maillon 4, afin de provoquer par soudure la fermeture complète de celui-ci.

La dimension du faisceau laser est elle-même fonction du diamètre du fil 1 constituant les spires 3. Pour des diamètres de fil de 0,2 à 1,2 mm, le diamètre du faisceau laser au niveau du point d'impact sur le maillon à souder est, avantageusement, compris entre environ 0,4 et 0,7 mm.

Le procédé selon l'invention s'applique à la fabrication de chaînes à partir de métaux et alliages réfléchissants divers, tels que or jaune, or rose, or gris, argent, platine, cuivre, nickel, étain, zinc, cadnium, maillechort, bronze, laiton.

Une caractéristique essentielle du procédé selon l'invention, qui garantit une bonne qualité de soudure, réside dans la forme particulière de l'impulsion laser utilisée pour réaliser la soudure.

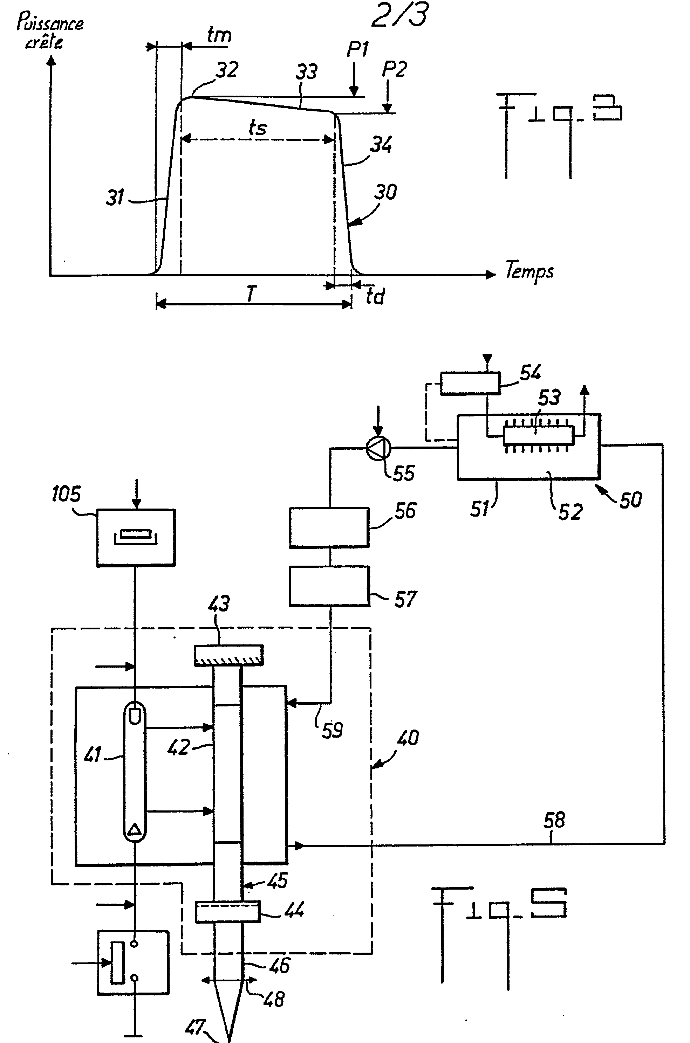

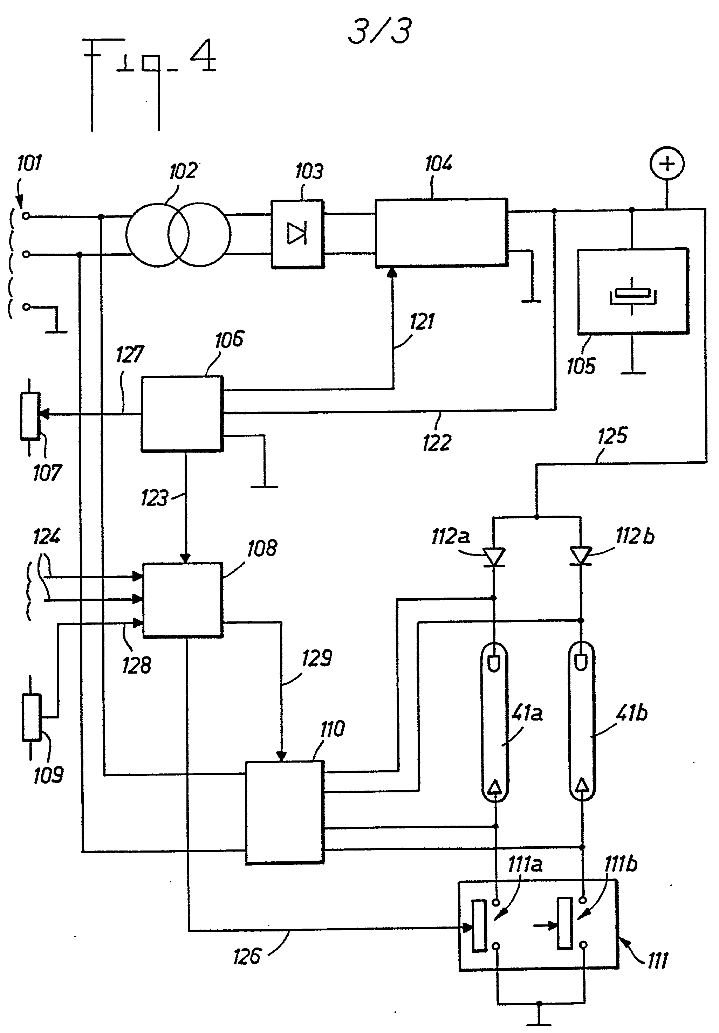

On a représenté, sur la fig. 2, la forme d'une impulsion laser 20 quasi idéale pour souder de façon parfaite des métaux ou alliages réfléchissants, tels que ceux utilisés en bijouterie. Cette impulsion 20 se caractérise par un front de montée 21 très raide et une puissance crête de départ élevée pour provoquer un échauffement rapide du métal (pointe initiale 22 de l'impulsion 20). L'échauffement rapide du métal accroît le coefficient d'absorption du métal. Ceci permet, pour terminer la soudure, de compléter l'apport thermique avec une puissance inférieure. Le sommet de l'impulsion 20 présente ainsi après la pointe 22 un niveau 23 inférieur. L'impulsion 20 présente, enfin, un front de descente 24 pratiquement vertical, ce qui permet de définir avec précision une longueur d'impulsion donnée. Le type d'impulsion 20 de la fig. 2 étant, cependant, relativement difficile à obtenir en pratique, on a représenté sur la fig. 3 une forme d'impulsion 30 plus simple à réaliser, tout en conduisant à des résultats excellents quant à la qualité de la soudure effectuée et la reproductibilité.

L'impulsion 30 de la fig. 3 se caractérise par un flanc de montée 31, relativement raide, bien que non rigoureusement vertical. Le temps de montée tm peut être compris, par exemple, entre environ 40 et 70 μs. Ce temps tm, qui correspond au passage de la puissance du faisceau laser d'un niveau 0 à une puissance crête maximum $P_1$, ne s'avère pas gênant pour des impulsions dont la durée totale T est comprise entre environ 1,5 et 5 ms. Le fait que le front de montée 31 de l'impulsion 30 ne soit ni tout-à-fait vertical, ni exempt d'un arrondi en son sommet 32, provient de la présence d'une inductance résiduelle faible, mais non négligeable du circuit de puissance du générateur laser et d'un retard à l'établissement du courant dans les tubes de pompage du générateur laser, dû à l'ionisation du gaz contenu dans ces derniers.

Le sommet de l'impulsion 30, qui correspond à une durée ts, est constitué par une droite inclinée 33 présentant une pente descendante depuis le niveau maximum $P_1$ de la puissance crête au voisinage du front de montée 31 jusqu'à un niveau inférieur $P_2$ qui peut être de l'ordre de 20 % inférieur au niveau $P_1$. L'impulsion 30 présente enfin un front de descente 34 pratiquement vertical, qui correspond à un temps td très réduit, inférieur en pratique au temps de montée tm.

Le type d'impulsion 30, représenté sur la fig. 3, remplit, comme l'impulsion 20 de la fig. 2, les conditions nécessaires à une soudure quasiment parfaite, à savoir :
. montée rapide en puissance,
. poursuite de l'apport thermique avec une décroissance faible de la puissance,
. arrêt rapide de l'apport thermique,
. réglage dans une plage très importante de la longueur de l'impulsion,
. réglage dans un rapport de 1 à 8 environ, de la puissance crête de départ $P_1$, en fonction de la tension de service.

On décrira maintenant, en référence aux fig. 4 et 5, un dispositif permettant d'obtenir facilement une impulsion, telle que celle représentée sur la fig. 3.

La fig. 5 montre, schématiquement, une tête laser 40 d'un générateur laser connu sous le nom de laser YAG, qui émet un faisceau de lumière cohérente de longueur d'onde 1,064 μm et se trouve particulièrement bien adapté à l'application envisagée dans le cadre de la présente invention.

La tête laser 40 comporte une cavité résonnante 45 avec, aux extrémités, deux miroirs 43, 44 d'axe commun, entre lesquels est disposé un milieu amplificateur constitué par un barreau 42 de Grenat d'Yttrium Aluminium (YAG) dopé au néodyme. Un tube à décharge 41 est associé à la cavité résonnante 45 pour émettre des photons destinés à exciter les atomes du milieu amplificateur 42 (opération de pompage optique). L'excitation par les photons émis par le tube de pompage 41 provoque l'émission d'un faisceau 46 de lumière cohérente qui traverse le miroir semi-transparent de sortie 44 et est focalisé par une lentille convergente 48 en un point 47 correspondant à la zone à souder. Compte tenu des puissances mises en jeu et de l'échauffement produit, un ensemble 50 de refroidissement doit être adjoint de façon classique à la tête laser 40. Cet ensemble 50 de refroidissement peut comprendre un réservoir-échangeur 51 comprenant un fluide 52 refroidi par un échangeur 53 dans lequel circule par exemple de l'eau. Une pompe 55 permet de faire circuler le fluide de refroidissement 52 depuis le réservoir 51 vers la tête laser 40 par la ligne 59 puis, de nouveau, vers le réservoir-échangeur 51 par la ligne 58. Les sous-ensembles 54, 56, 57 représentent, respectivement, un circuit de régulation de température, un dispositif de contrôle de débit et un moyen de mesure de température.

La fig. 4 représente le schéma synoptique des circuits électriques et électroniques de commande et d'alimentation d'une tête laser 40 comportant deux tubes de pompage 41a, 41b. Le principe des circuits de commande et d'alimentation reste, cependant, le même, quel que soit le nombre de tubes de pompage 41a, 41b montés en parallèle.

Les tubes à décharge 41a, 41b sont alimentés sous haute tension et amorcés dès la mise en route du générateur laser, par l'intermédiaire d'un bloc d'amorçage 110 relié au réseau d'alimentation en courant alternatif 101. Un ensemble 111 de commutateurs statiques 111a, 111b, montés en série avec les tubes à décharge 41a, 41b, commande la conduction des tubes 41a, 41b et détermine le début et la fin de l'impulsion laser 30 à produire. Lors de la fermeture des commutateurs statiques, l'énergie nécessaire à l'alimentation des tubes à décharge 41a, 41b est prélevée sur une batterie de condensateurs 105, mais de telle manière que seule une partie de la charge des condensateurs 105 soit utilisée à chaque impulsion. Le fait que l'énergie stockée dans la batterie de condensateurs 105 soit très nettement supérieure à celle prélevée pour chaque tir du laser garantit que les impulsions produites sont bien les plus rectangulaires possibles.

L'alimentation de puissasnce du laser comprend un transformateur principal 102, suivi d'un redresseur 103 et d'une alimentation à découpage haute fréquence 104 commandée par la ligne 121 à partir d'un circuit 106 de mesure qui effectue par la ligne 122 une mesure de la tension aux bornes de la batterie de condensateurs 105. Le circuit 106 reçoit par la ligne 127 une valeur de consigne depuis un circuit 107 qui fournit une valeur de tension réglable et, en fonction des valeurs mesurées par la ligne 122, envoie au circuit d'alimentation 104, par la ligne 121, des ordres de charge des condensateurs 105, ou à un circuit de commande 108 par la ligne 123 des signaux de sécurité interdisant le fonctionnement du laser lorsqu'un défaut est constaté.

Le circuit de commande 108 reçoit, par les lignes 124, des ordres de tir selon une cadence qui peut être élevée et, par la ligne 128, une tension de consigne depuis un circuit 109 fournissant une valeur de tension réglable qui détermine la longueur de l'impulsion laser à émettre. Le circuit de commande 108 envoie, par la ligne 126, des signaux pour la fermeture et l'ouverture des c mmutateurs statiques de sortie 111$\underline{a}$, 111$\underline{b}$ et, par la ligne 129, des signaux au bloc d'amorçage 110 et peut présenter également d'autres fonctions annexes, telles que, par exemple, la commande d'un mode "simmer", visant à maintenir les tubes 41$\underline{a}$, 41$\underline{b}$ ionisés en permanence après l'amorçage, ou la commande du renforcement du courant d'ionisation des tubes 41$\underline{a}$, 41$\underline{b}$ pendant un temps limité, par exemple 1 ms, avant l'émission d'une impulsion laser, afin de diminuer les chocs thermiques et mécaniques auxquels sont soumis les tubes 41$\underline{a}$, 41$\underline{b}$ et d'en augmenter ainsi la durée de vie.

Des diodes 112$\underline{a}$, 112$\underline{b}$ sont montées entre la ligne 125 d'alimentation reliée à la batterie de condensateurs 105 et les tubes 41$\underline{a}$, 41$\underline{b}$, du côté des anodes de ces tubes pour isoler les tensions de l'ordre de 400 volts pour le banc de condensateurs 105 et de l'ordre de 800 à 1 000 volts pour le bloc d'amorçage 110 équipé d'un circuit dit de simmer visasnt à maintenir les tubes 41$\underline{a}$, 41$\underline{b}$ ionisés en permanence après l'amorçage.

On notera que des paramètres de fonctionnement du laser, comprenant une tension de fonctionnement maximum de 400 V, un courant maximum par tube 41$\underline{a}$, 41$\underline{b}$, de 350 A et une capacité unitaire associée à chaque tube 41$\underline{a}$, 41$\underline{b}$ de l'ordre de 12 000 à 12 500 $\mu$F permettent de déterminer automatiquement un niveau $P_2$ d'impulsion au voisinage du front de descente 34 qui est de l'ordre de 20 % en dessous du niveau $P_1$ au voisinage du front de montée 31 (fig. 3).

Les commutateurs statiques de sortie 111$\underline{a}$, 111$\underline{b}$ peuvent être réalisés à partir de thyristors traditionnels. Dans ce cas, il est nécessaire d'utiliser un thyristor principal pour fermer le circuit et un thyristor auxiliaire prévu pour provoquer la décharge d'une capacité aux bornes du thyristor principal. Ce procédé est, plus particulièrement, adapté à des cas de fréquence de travail faibles, inférieures à environ 20 Hz, qui correspondent bien au rythme auquel les soudures peuvent être effectuées lors de la fabrication d'une chaîne en bijouterie. Des thyristors à commande par gâchette du type G-T-O peuvent également être utilisés si les puissances à mettre en jeu ne sont pas trop élevées.

Selon une variante de réalisation, les commutateurs statiques 111$\underline{a}$, 111$\underline{b}$ peuvent comprendre un ensemble de transistors bipolaires montés en parallèle. Ce mode de réalisation est cependant plus délicat à réaliser en ce qui concerne le système de protection et d'aide à la commutation placé entre émetteur et collecteur.

Selon encore un autre mode de réalisation, les commutateurs statiques 111$\underline{a}$, 111$\underline{b}$ comprennent un ensemble de transistors MOS montés en parallèle. Dans ce cas, il est nécessaire que le montage comprenne des protections parfaites contre les surtensions et le signal de commande de grille doit être élaboré, de manière à tenir compte du fait que la capacité d'entrée est d'autant plus importante que le nombre de transistors MOS mi en parallèle est grand.

Le procédé selon l'invention peut, facilement, être appliqué à la fabrication en parallèle de plusieurs chaînes différentes sur plusieurs machines différentes de fabrication de chaîne, sans qu'il soit nécessaire d'utiliser plusieurs têtes laser, ce qui augmente considérablement la rentabilité. Il est ainsi possible de fabriquer en parallèle, par exemple, deux chaînes différentes à l'aide de deux machines.

Dans ce cas, les machines de fabrication de chaîne fonctionnent simultanément avec un décalage d'un demi-pas, correspondant à un décalage d'un demi-tour sur l'arbre d'entraînement principal et le rayonnement issu de la tête laser 40 est dirigé alternativement vers la première chaîne en cours de fabrication et vers la seconde chaîne en cours de fabrication, pour réaliser la soudure d'un maillon alternativement sur la première chaîne et sur la seconde chaîne. Un prisme mobile en translation est interposé sur le trajet du rayonnement laser à la sortie de la tête laser, pour diriger l'impulsion laser produite vers l'une ou l'autre des chaînes en cours de fabrication.

La réalisation simultanée de plusieurs chaînes est particulièrement intéressante, car elle permet d'accroître facilement les cadences de production, le soudage d'un maillon sur une chaîne pouvant s'effectuer pendant que sur une autre chaîne une spire est découpée et conformée en maillon. Il est naturellement nécessaire de prévoir des moyens de synchronisation du fonctionnement de chaque machine de fabrication et du générateur laser, afin de garantir qu'à chaque opération de soudage sur un maillon, celui-ci soit bien positionné, de manière que la fente à souder 5 se trouve dans la zone de tir du générateur laser 40.

Dans le cas où il est nécessaire de réaliser alternativement à l'aide d'une même tête laser des soudures nécessitant des longueurs d'impulsion laser différentes, par exemple pour la soudure alternative d'une maille en or jaune et d'une maille en argent, le bloc de commande 108 peut comporter deux générateurs d'impulsions différents commandés par deux entrées différentes au lieu de la seule entrée 128.

Le tableau ci-après donne, à titre d'exemple, pour différents métaux et alliages réfléchissants, en fonction du diamètre du fil, des valeurs de puissance crête et de longueur d'impulsion permettant d'obtenir, à la fois, un bel aspect et une grande reproductibilité des soudures. Les valeurs de longueur d'impulsion sont à respecter de façon assez précise, mais peuvent, cependant, être légèrement modifiées en fonction des nuances des alliages utilisés. En revanche, les valeurs de puissance crête peuvent être adaptées dans une plus grande mesure, en fonction de la pénétration de soudure désirée.

| Puissance crête et longueur d'impulsion en fonction de l'alliage et du diamètre de fil | | | | | | |
|---|---|---|---|---|---|---|
| **Matériau** | **Or jaune** | **Or rose** | **Or gris** | **Argent** | **Platine** | **Bronze** |
| **Diamètre fil en mm** | | | | | | |
| 0,23 | 800/1,8 · | 900/1,8 | 800/1,9 | 3000/2,1 | 1100/2,0 | 1200/1,9 |
| 0,35 | 1000/2,3 | 1100/2,3 | 1000/2,3 | 3400/3,0 | 1500/2,5 | 2000/2,5 |
| 0,50 · | 2000/3,0· | 2100/3,0 | 2000/3,1 | 3600/4,0 | 2100/2,8 | 2700/3,1 |
| 0,60 | 2400/3,0 | 2600/3,0 | 2400/3,3 | 4000/4,5 | X | 3300/3,7 |
| 0,80 | 2900/3,5 | 3000/3,3 · | 3000/3,6 | X | X | 3800/4,0 |
| 1,00 | 3300/4,0 | 3500/4,0 · | 3300/4,2 | X | X | X |
| 1,20 | 4000/4,5 | 4100/4,5 | 4000/4,8 | X | X · | X |

Legende:

800/1,8 signifie: 800 W crête/1,8 ms de longueur d'impulsion,

X: cas non utilisés en pratique, compte tenu de la puissance crête nécessaire ou du coût du matériau.

## Revendications

1. Procédé de fabrication d'une chaîne métallique de bijouterie à partir d'un fil métallique continu (1), selon lequel on enroule sur un mandrin le fil métallique continu (1) pour le conformer en hélice (1a) à spires (2) non jointives, on découpe une à une successivement les diverses spires ouvertes (3) formées, on façonne les diverses spires (3) découpées pour réaliser des maillons (4) de forme prédéterminée, et pour réaliser la fermeture complète de chacun des maillons (4), on procède au soudage individuel des divers maillons (4) engagés les uns dans les autres en dirigeant sur la fente (5) formée dans chaque maillon (4) une impulsion laser (20, 30) de durée (T) et de puissance crête ($P_1$, 22, 32) prédéterminées en fonction du diamètre du fil métallique (1) utilisé et de la nature du métal constituant ledit fil métallique, caractérisé en ce qu'on réalise le soudage individuel de chaque spire découpée immédiatement après sa conformation en maillon (4) de forme prédéterminée, en ce que l'impulsion laser (20, 30) présente un front de montée (21, 31) raide correspondant à un temps de montée (tm) compris entre environ 40 et 70 microsecondes et permettant d'atteindre rapidement ladite puissance crête maximum prédéterminée ($P_1$, 22, 32), un sommet (23, 33) d'une durée prédéterminée (ts) et légèrement descendant à partir de ladite puissance crête maximum prédéterminée ($P_1$, 22, 32) adjacente auf front de montée (21, 31), puis un front de descente (24, 34) pratiquement vertical correspondant à un temps de descente (td) inférieur au temps de montée (tm) et en ce que, pendant ladite durée prédéterminée (ts) correspondant au sommet (23, 33) légèrement descendant de l'impulsion laser (20, 30), la chute de puissance ($P_1$–$P_2$) est de l'ordre de 20% de la puissance crête ($P_1$, 22, 32), $P_2$ représentant la puissance de l'impulsion laser correspondant au point d'intersection du sommet (22, 33) avec le front de descente (24, 34).

2. Procédé selon la revendication 1, caractérisé en ce que la durée (T) de l'impulsion laser (20, 30) est comprise entre environ 1,5 et 5 ms.

3. Procédé selon l'une quelconque des revendications 1 et 2, caractérisé en ce que la puissance crête ($P_1$) de l'impulsion laser (20, 30) est comprise entre environ 800 W et 4000 W.

4. Procédé selon l'une quelconque des revendications 1 à 3, caractérisé en ce que l'impulsion laser (20, 30) est obtenue à partir d'un générateur laser de type YAG et présente une longueur d'onde de l'ordre de 1,06 micromètre.

5. Procédé selon l'une quelconque des revendications 1 à 4, caractérisé en ce que le faisceau laser utilisé présente, au point d'impact sur la fente (5) de chaque maillon (4) à souder, un diamètre compris entre environ 0,4 et 0,7 mm.

6. Procédé selon l'une quelconque des revendications 1 à 5, caractérisé en ce que le diamètre du fil métallique continu (1) est compris entre environ 0,2 et 1,2 mm.

7. Procédé selon l'une quelconque des revendications 1 à 6, caractérisé en ce que le fil métallique (1) est réalisé à partir de l'une des matières suivantes: or jaune, or rose, or gris, argent, platine, cuivre, nickel, étain, zinc, cadmium, maillechort, bronze, laiton.

8. Procédé selon l'une quelconque des revendications 1 à 7, caractérisé en ce que l'on fabrique en parallèle plusieurs chaînes métalliques de bijouterie à partir de plusieurs fils métalliques continus, on enroule sur plusieurs mandrins différents les différents fils métalliques continus pour les conformer en hélices à spires non jointives et on procède, alternativement, sur chacune des hélices, d'une part, à la découpe d'une spire ouverte formée à l'extrémité libre de l'hélice et au façonnage d'un maillon de forme prédéterminée à partir de la spire découpée et, d'autre part, au soudage individuel, à l'aide d'une impulsion laser, d'un maillon façonné, une opération de découpe de spire et de façonnage d'un maillon étant réalisée sur une chaîne pendant qu'une opération de soudage de maillon est réalisée sur une autre chaîne et vice versa et en ce que les opérations de soudage de maillons, réalisées sur les différentes chaînes métalliques fabriquées en parallèle, sont effectuées à partir d'une tête laser unique dont le rayonnement est dirigé alternativement vers les zones à souder des différentes chaînes métalliques.

9. Dispositif de fabrication d'une chaîne métallique de bijouterie pour la mise en œuvre du procédé selon l'une quelconque des revendications 1 à 8, comprenant une bobine (10) sur laquelle est monté un fil métallique continu (1), une machine comprenant une filière (11) pour donner au fil métallique continu (1) la forme d'une hélice (1a) à spires non jointives (2), des moyens pour produire une avance de l'hélice (1a) pas à pas, des outils de découpe (12) pour assurer le sectionnement successif des différentes spires (3), des pinces (13) pour façonner les diverses spires découpées (3) en maillons (4) de forme prédéterminée fermés et imbriqués les uns dans les autres, et un générateur laser pour procéder au soudage individuel des divers maillons (4) engagés les uns dans les autres, caractérisé en ce que les outils de découpe (12) et les pinces (13) sont disposés de manière à ménager un espace libre pour l'application d'un faisceau laser à partir du générateur laser et en ce que le générateur laser est du type YAG et comprend une tête laser (40) avec au moins un tube de pompage (41a, 41b), un banc de condensateurs (105) pour stocker une énergie très supérieure à celle prélevée à chaque émission d'une impulsion laser, une alimentation à découpage haute fréquence (104) pour la charge du banc de condensateurs (105), un circuit (106, 107) de mesure de la tension aux bornes du banc de condensateurs (105) et de réglage de la tension de charge du banc de condensateurs (105) par l'intermédiaire de l'alimentation à découpage (104), un ou plusieurs commutateurs statiques (111) en série avec le ou les tubes de pompage (41a, 41b) de la tête laser (40) et un circuit logique de commande (108, 109) pour commander l'ouverture et la fermeture des commutateurs statiques (111) et régler la durée d'impulsion et la fréquence de répétition des impulsions.

10. Dispositif selon la revendication 9, caractérisé en ce que le générateur laser, du type YAG, comprend deux générateurs d'impulsions réglés pour produire chacun des impulsions de durées différentes.

## Patentansprüche

1. Verfahren zur Herstellung einer metallischen Schmuckkette aus einem durchgehenden Metalldraht (1), nach dem der durchgehende Metalldraht (1) so auf eine Spule gewickelt wird, daß aus ihm eine Spirale (1a) mit abstehenden Windungen (2) entsteht, die verschiedenen gebildeten offenen Windungen (3) nacheinander einzeln abgeschnitten werden, die verschiedenen abgeschnittenen Windungen (3) geformt werden, um Kettenglieder (4) von vorgegebener Form herzustellen, und zur Durchführung des vollständigen Verschließens jedes Kettenglieds (4) das Einzellöten der verschiedenen ineinandergefügten Kettenglieder (4) erfolgt, indem auf den in jedem Kettenglied (4) gebildeten Spalt (5) ein Laserimpuls (20, 30) von vorgegebener Dauer (T) und Spitzenleistung ($P_1$, 22, 32) in Abhängigkeit vom Durchmesser des verwendeten Metalldrahts (1) und der diesen Metalldraht bildenden Metallart gerichtet wird, dadurch gekennzeichnet, daß das Einzellöten jeder abgeschnittenen Windung sofort nach ihrer Umformung zum Kettenglied (4) vorgegebener Form erfolgt, daß der Laserimpuls (20, 30) eine steile Anstiegsfront (21, 31) aufweist, die einer Anstiegszeit (tm) entspricht, die zwischen 40 und 70 Mikrosekunden liegt und ermöglicht, diese vorgegebene maximale Spitzenleistung ($P_1$, 22, 32) rasch zu erreichen, einen Gipfel (23, 33) von vorgegebener Dauer (ts) und sanft absteigend von dieser an die Anstiegsfront (21, 31) angrenzenden vorgegebenen maximalen Spitzenleistung ($P_1$, 22, 32) aus, dann eine faktisch vertikale Abfallfront (24, 34), die einer Abfallzeit (td) entspricht, die kürzer als die Anstiegszeit (tm) ist, und daß während dieser, dem sanft absteigenden Gipfel (23, 33) des Laserimpulses (20, 30) entsprechenden vorgegebenen Dauer (ts), der Leistungsabfall ($P_1$–$P_2$) die Größenordnung von 20% der Spitzenleistung ($P_1$, 22, 32) hat, wobei $P_2$ die dem Schnittpunkt des Gipfels (22, 33) mit der Abfallfront (24, 34) entsprechende Leistung des Laserimpulses darstellt.

2. Verfahren nach Anspruch 1, dadurch gekennzeichnet, daß die Dauer (T) des Laserimpulses (20, 30) zwischen ungefähr 1,5 und 5 ms liegt.

3. Verfahren nach einem der Ansprüche 1 und 2, dadurch gekennzeichnet, daß die Spitzenleistung ($P_1$) des Laserimpulses (20, 30) ungefähr zwischen 800 W und 4000 W liegt.

4. Verfahren nach einem der Ansprüche 1 bis 3, dadurch gekennzeichnet, daß der Laserimpuls (20, 30) von einem Lasergenerator des Typs YAG aus erlangt wird und eine Wellenlänge in der Größenordnung von 1,06 Mikrometern darstellt.

5. Verfahren nach einem der Ansprüche 1 bis 4, dadurch gekennzeichnet, daß der verwendete Laserstrahl beim Auftreffpunkt auf den Spalt (5) eines jeden zu lötenden Kettenglieds (4) einen ungefähr zwischen 0,4 und 0,7 mm liegenden Durchmesser aufweist.

6. Verfahren nach einem der Ansprüche 1 bis 5, dadurch gekennzeichnet, daß der Durchmesser des durchgehenden Metalldrahts (1) ungefähr zwischen 0,2 und 1,2 mm liegt.

7. Verfahren nach einem der Ansprüche 1 bis 6, dadurch gekennzeichnet, daß der Metalldraht (1) aus einem der folgenden Werkstoffe hergestellt wird: Gelbgold, rosa Gold, Graugold, Silber, Platin, Kupfer, Nickel, Zinn, Zink, Kadmium, Neusilber, Bronze, Messing.

8. Verfahren nach einem der Ansprüche 1 bis 7, dadurch gekennzeichnet, daß mehrere metallische Schmuckketten aus mehreren durchgehenden Metalldrähten parallel hergestellt werden, daß auf mehrere verschiedene Spulen die verschiedenen durchgehenden Metalldrähte so gewickelt werden, daß aus ihnen Spiralen mit abstehenden Windungen entstehen und daß abwechselnd auf jeder Spirale einerseits eine offene, am freien äußersten Spiralenende gebildete Windung abgeschnitten wird und ein Kettenglied von vorgegebener Form aus der abgeschnittenen Windung geformt wird, und andererseits mit Hilfe eines Laserimpulses ein geformtes Kettenglied einzeln gelötet wird, wobei auf einer Kette ein Vorgang Abschneiden der Windung und Formen eines Kettengliuds erfolgt, während auf einer anderen Kette ein Kettenglied-Lötvorgang erfolgt und umgekehrt, und daß die auf den verschiedenen parallel hergestellten Metallketten vorgenommenen Kettenglied-Lötvorgänge von einem einzigen Laserkopf aus erfolgen, dessen Strahlung abwechselnd auf die Lötzonen der verschiedenen Metallketten gerichtet ist.

9. Vorrichtung zur Herstellung einer metallischen Schmuckkette für die Anwendung des Verfahrens nach einem der Ansprüche 1 bis 8, mit einer Spule (10), die einen durchgehenden Metalldraht (1) trägt, einer Maschine, die eine Ziehvorrichtung (11) enthält, um dem durchgehenden Metalldraht (1) die Form einer Spirale (1a) mit abstehenden Windungen (2) zu geben, Mitteln für die Erzeugung eines schrittweisen Vorschubs der Spirale (1a), Schneidwerkzeugen (12) zur Durchführung der aufeinanderfolgenden Abtrennung der verschiedenen Windungen (3), Zangen (13) zur Umformung der verschiedenen abgeschnittenen Windungen (3) in geschlossene und aneinandergefügte Kettenglieder (4) von vorgegebener Form und einem Lasergenerator für die Durchführung des Einzellötens der verschiedenen ineinandergefügten Kettenglieder (4), dadurch gekennzeichnet, daß die Anordnung der Schneidwerkzeuge (12) und Zangen (13) einen Freiraum für die Anwendung eines Laserstrahls von einem Lasergenerator aus übrigläßt und daß der Lasergenerator vom Typ YAG ist und einen Laserkopf (40) umfaßt, mit mindestens einer Pumpröhre (41a, 41b), einer Kondensatorenbank (105) für die Speicherung einer viel höheren Energie als die bei jeder Laserimpuls-Emission entnommene, einer Spannungsversorgung mit Hochfrequenz-Zerhackung (104) für die Ladung der Kondensatorenbank (105), einem Meß- und Regelkreis (106, 107) zur Messung der Spannung an den Kondensatorenbank-Klemmen (105) und zur Regelung der Ladespannung der Kondensatorenbank (105) mittels Spannungsversorgung mit Hochfrequenz-Zerhackung (104), einem oder mehreren mit der oder den Pumpröhre(n) (41a, 41b) des Laserkopfs (40) in Serie geschalteten statischen Schaltern (111) und einem logischen Steuerkreis (108, 109) zur Steuerung des Öffnens und Schließens der statischen Schalter (111) und zur Einstellung der Impulsdauer und Impulsfolgefrequenz.

10. Vorrichtung nach Anspruch 9, dadurch gekennzeichnet, daß der Lasergenerator des Typs YAG zwei geregelte Impulsgeneratoren umfaßt, die so geregelt sind, daß sie Impulse von verschiedener Dauer erzeugen.

### Claims

1. A method for producing a metallic jewelry chain starting with a continuous metallic wire (1), in which the continuous metallic wire (1) is wound on a mandril in order to cause it to conform to a helix (1a) with non-joined turns (2), successively and one by one the individual turns (3) formed are cut up, the individual cut turns (3) are fashioned into links (4) with a predetermined form, and in order to completely close each of the links (4) the individual links (4) are separately welded while fitted into each other by directing, into the gap (5) formed in each link (4) a laser pulse (20 and 30) with a duration (T) and a peak power ($P_1$, 22 and 32) predetermined in accordance with the diameter of the metallic wire (1) utilized and of the nature of the metal constituting the said metallic wire, characterized in that the separate welding of each cut turn is performed immediately after causing it to conform to a predetermined link (4) form, in that the laser pulse (20 and 30) has a steep ascending flank (21 and 31) corresponding to a rise time (tm) comprised between approximately 40 and 70 microseconds and making it possible to rapidly attain the said maximum predetermined peak power ($P_1$, 22 and 32) a summit (23 and 33) of a predetermined duration (ts) and descending slightly as from the said maximum predetermined peak power ($P_1$, 22 and 32) adjacent to the ascending flank (21 and 31), then a descending flank (24 and 34), which is practically vertical, corresponding to a descent time (td) less than the rise time (tm) and in that, during the said predetermined duration (ts) corresponding to the slightly descending summit (23 and 33) of the laser pulse (20 and 30), the drop in power ($P_1$–$P_2$) is of the order of 20% of the peak power ($P_1$, 22 and 32), $P_2$ representing the power of the laser pulse corresponding to the point of intersection of the summit (22 and 33) with the descending flank (24 and 34).

2. The method as claimed in claim 1, characterized in that the duration (T) of the laser pulse (20 and 30) is comprised between approximately 1.5 and 5 ms.

3. The method as claimed in claim 1 or in claim 2, characterized in that the peak power ($P_1$) of the laser pulse (20 and 30) is comprised between 800 W and 4,000 W.

4. The method as claimed in any one of the claims 1 through 3, characterized in that the laser pulse (20 and 30) is obtained using a laser generator of the YAG type and has a wave length of the order of 1.06 microns.

5. The method as claimed in any one of the claims 1 through 4, characterized in that the laser beam used has, at the point of impingement in the gap (5) of each link (4) to be welded, a diameter comprised between 0.4 and 0.7 mm.

6. The method as claimed in any one of the claims 1 through 5, characterized in that the diameter of the metallic wire (1) is comprised between 0.2 and 1.2 mm.

7. The method as claimed in any one of the claims 1 through 6, characterized in that the metallic wire (1) is made using one of the following materials: yellow gold, pink gold, gray gold, silver, platinum, copper, nickel, tin, zinc, cadmium, German silver, bronze and brass.

8. The method as claimed in any one of the claims 1 through 7, characterized in that several metallic jewelry chains are manufactured in parallel starting with several metallic continuous metallic wires, the different continuous metallic wires are coiled onto several different mandrils in order to cause them to conform to helices with nonjoined turns and then alternatively on each of the helices on the one hand there is the step performed in each thereof of cutting up an open turn formed on the free end of the helix and manufacturing a link with a predetermined form starting with the cut turn and, on the other hand, there is a separate welding operation performed with the aid of a laser pulse on a link produced, an operation of cutting of a turn and producing a link being perfomerd on one chain while an operation of welding is performed on another chain and vice versa and in that the operations of welding links, performed on different metallic chains manufactured in parallel, are performed using a single head laser whose radiation is directed alternatively towards the zones to be welded of different metallic chains.

9. A manufacturing apparatus for the production of a jewelry chain for performing the method as claimed in any one of the claims 1 through 8, comprising a bobbin (10) on which a continuous metallic wire (1) is arranged, a machine comprising a drawing device (11) to endow the continuous metallic wire (1) with the form of a helix (1a) with nonjoined turns (2), means to produce an advancing motion of the helix (1a) step by step, cutting tools (12) in order to ensure the successive cutting of different turns (3), grippers (13) in order to form individual cut turns (3) into links (4) with a closed predetermined form linked with each other, and a laser generator in order to proceed to the separate welding of the individual links (4) linked with each other, characterized in that the cutting tools (12) and the grippers (13) are placed in such a manner as to leave a free space for the application of a laser beam from the laser generator and in that the laser generator is of the YAG type and comprises a laser head (40) with at least one pumping tube (41a and 41b), a bank of capacitors (105) for storing an amount of energy very much in excess of that taken for each emission of a laser pulse, a high frequency cutting supply system (104) for charging the bank of capacitors (105), a circuit (106 and 107) to measure the voltage at the terminals of the bank of capacitors (105) and for the control of the voltage for charging the bank of capacitors (105) by way of the cutting power supply (104), one or more static switches (111) in series with the pumping tube or tubes (41a and 41b) for the laser head (40) and a logic control circuit (108 and 109) to control the switching on and off of the static switches (111) and to control the duration of the pulses and the repetition frequency of the pulses.

10. The apparatus as claimed in claim 9, characterized in that the laser generator, a generator of the YAG type, comprises two controlled pulse generators in order each to produce pulses with different durations.

Fig.1

Fig.2

Puissance crête

Temps

2/3

Puissance
crête

tm

32    33    P1
              P2

ts

31        34
              30

Temps

T    td

Fig.3

54
53

55

105    56

57

43

41    42

59    40

45

44

46

48

47

58

51    52    50

Fig.5

Fig. 4